# EUROPÄISCHE PATENTANMELDUNG

(11) **EP 2 143 689 A1**
(43) Veröffentlichungstag der Anmeldung: **13.01.2010**
(21) Anmeldenummer: 08159829.4
(22) Anmeldetag: 07.07.2008
(51) Int. Cl.: C01G 15/00, C01G 19/00

(54) **Indiumzinnoxid-Partikel enthaltende Dispersion**

(71) Anmelder: Evonik Degussa GmbH, 45128 Essen (DE)
(72) Erfinder: Prodi-Schwab, Anna Dr., 45133 Essen (DE); Inhester, Martina, 46244 Bottrop (DE); Thölmann, Detlef Dr., 45770 Marl (DE); Adam, Dieter Dr., 59494 Soest (DE)

(57) **Zusammenfassung**

Oberflächenmodifizierte Indiumzinnoxid-Partikel enthaltende Dispersion, welche frei von Bindemitteln ist, dadurch gekennzeichnet, dass sie ein oder mehrere Lösungsmittel und ein oder mehrere Dispergiermittel enthält, wobei
a) die oberflächenmodifizierten Indiumzinnoxid-Partikel
a1) einen Anteil an Indium von 93 bis 96 Gew.-%, Zinn von 4 bis 7 Gew.-%, Kohlenstoff von 0,01 bis 0,1 Gew.% aufweisen, wobei die Summe dieser Anteile mindestens 99 Gew.-% bezogen auf die Summe von Indium, Zinn und Kohlenstoff ist,
a2) auf der xy-Farbskala Werte von x = 0,300 bis 0,320 und y-Werte von y = 0,330 bis 0,360,
a3) eine BET-Oberfläche von 30 bis 100 m²/g,
a4) einen Pulverwiderstand von 0,5 bis 5 Ohm·cm aufweisen, und
a5) mit einem Anteil von 10 bis 40 Gew.-% in der Dispersion vorliegen und wobei

b) das Dispergiermittel
b1) ausgewählt ist aus der Gruppe der Oligoether und/oder Polyether und
b2) mit einem Anteil von 0,5 bis 10 Gew.-% in der Dispersion vorliegt.

## Beschreibung

Die Erfindung betrifft eine Indiumzinnoxid-haltige Dispersion, sowie ein mit dieser Dispersion erhältliches beschichtetes, transparentes und leitfähiges Substrat.

Transparente Schichten mit hoher ohmscher Leitfähigkeit werden in allen modernen Displays, z.B. in LCD, Plasma-Displays, OLEDs, und z.B. auch in organischen Solarzellen benötigt, um die durch den photovoltaischen Effekt angeregten elektrischen Ströme verlustarm nutzen zu können.

Die hierzu eingesetzten Materialien werden gemeinhin als "TCOs" ("transparent conductive oxides", transparente, leitfähige Oxide) bezeichnet. Indiumzinnoxid (ITO) ist der wichtigste Vertreter dieser Gruppe.

Es wird schon lange nach Verfahren gesucht, die es erlauben TCO in einem kostengünstigen Beschichtungs- bzw. Druckprozess auf Glas- oder Kunststoffoberflächen aufzubringen, um so auf die technisch aufwändigen Vakuumprozesse, wie z.B. Sputtern, CVD oder PVD, zur Herstellung transparenter leitfähiger Schichten verzichten zu können.

In einer Reihe von Patentanmeldungen ist die Verwendung von löslichen Metallverbindungen zur Herstellung leitfähiger transparenter Schichten mittels Beschichtungs- bzw. Drucktechniken beschrieben. So können Indium- und Zinnverbindungen, die durch Pyrolyse oder Hydrolyse in Indium-Zinnoxid, im Folgenden mit "ITO" abgekürzt, überführt werden können, eingesetzt werden. Die Pyrolyse der Vorläuferverbindungen kann thermisch oder durch Laserbestrahlung erfolgen.

Ein alternativer Ansatz zur Erstellung hochleitfähiger transparenter Schichten in einem Beschichtungs- bzw. Druckprozess besteht in der Verwendung von ITO- oder ATO-(Antimon-Zinnoxid-)-Dispersionen eingesetzt werden. Es hat sich jedoch gezeigt, dass die Qualität der Dispersionen nach dem Stand der Technik insbesondere bei strukturierenden Verfahren, wie Inkjet-Druck, Offsetdruck, Gravur/ Tiefdruck, Thermotransferdruck, Laserdruck, Flexodruck und Tampondruck, nicht ausreicht. So weisen die Dispersionen nach dem Stand der Technik oft nur eine kurzzeitige Stabilität gegen Sedimentation und/oder Flockulation aus, so dass es beispielsweise zum Verstopfen von Düsen und der Ausbildung ungleichmäßiger Schichten kommt. Zudem ist die Leitfähigkeit, der mit diesen Dispersionen erhaltenen Schichten verbesserungswürdig.

Der vorliegenden Erfindung liegt daher die Aufgabe zugrunde eine Dispersion bereitzustellen, die geeignet ist, insbesondere in strukturierenden Beschichtungsverfahren, hochleitfähige, transparente Schichten auf einem Substrat aufzubringen.

### Definitionen

Unter einem Agglomerat gemäß der Erfindung sind durch Kohäsion zusammengehaltene Primärpartikel zu verstehen. Die erhaltenen räumlichen Strukturen sind als solche handhabbar, zerfallen bei Einwirkung von Scherenergie in voneinander isolierte Primärpartikel. Darüber hinaus ist es möglich, dass die Agglomerate gemäß der Erfindung auch einen geringen Anteil, kleiner als 8%, in der Regel kleiner als 5%, fest miteinander verbundener Primärpartikel enthalten. Die Anzahl fest verbundener Primärpartikel beträgt in der Regel 2 bis 10. Die Agglomerate können gemäß der Erfindung durch Sprühtrocknung erhalten werden.

Unter vollständig oder weitestgehend vollständig voneinander isolierten Primärpartikeln ist gemäß der Erfindung ein Pulver zu verstehen. Falls fest miteinander verbundenen Primärpartikel vorliegen, so ist die Anzahl der fest miteinander verbunden Primärpartikel in der Regel 2 bis 10 beschränkt. Der mittlere Primärpartikeldurchmesser kann 2 bis 50 nm betragen. Gemäß der Erfindung kann das Pulver durch Einwirkung von Scherkräften aus einem Agglomerat erhalten werden.

Unter einem Indium-Zinn-Oxohydrat sind im wesentlichen röntgenamorphe Partikel zu verstehen. Das Oxohydrat kann geringe Anteile kristalliner Verbindungen enthalten. Das Indium-Zinn-Oxohydrat der vorliegenden Erfindung kann durch eine spezielle thermische Behandlung in ein Indiumzinnoxid überführt werden, das überwiegend oder vollständig aus kubischem Indiumzinnoxid besteht.

Bei dem Indiumzinnoxid gemäß der Erfindung handelt es sich im wesentlichen um ein Mischoxid von Indium und Zinn. Indium und Zinn können darin in einer oder in verschiedenen Oxidationsstufen vorliegen. Beispielsweise liegen In(+I) und/oder In(+III) sowie Sn(+II) und/oder Sn(+IV) vor. Sn liegt bevorzugt als Sn(+IV) vor. Gegebenenfalls können Indium und Zinn auch teilweise als In(0) oder Sn(0) vorliegen.

Bei dem Indiumzinnoxid handelt es sich um ein zinndotiertes Indiumoxid, d. h. der Anteil an Zinnoxid ist geringer als der Anteil an Indiumoxid. Der Anteil an Zinn, bezogen auf die Summe von Indium, gerechnet als In, und Zinn, gerechnet als Sn, beträgt beispielsweise 4 bis 7 Gew.-%. Das Indiumzinnoxid der vorliegenden Erfindung weist als kristalline Phase überwiegend oder vollständig kubisches Indiumzinnoxid auf.

Das Indium-Zinn-Oxohydrat und das Indiumzinnoxid gemäß der Erfindung können Verunreinigungen enthalten. Der akzeptierbare Grad hängt vom Verwendungszweck ab. Über die Edukte kann beispielsweise SO₄²⁻, Co, Cu, Fe, Ni, Pb, Zn, K oder Na enthalten sein. Durch Verwendung reiner Edukte können SO₄²⁻, Ca, Co, Cu, Fe, Ni, Pb und Zn auf unter 0,005 Gew.-% und Na, K auf unter 0,01 Gew. % gebracht werden. Über das Verfahren eingebrachte Verbindungen, beispielsweise NH₄⁺ und Cl⁻ können falls erforderlich praktisch vollständig entfernt werden.

In der Regel sind weniger als 1 Gew.-% Verunreinigungen bezogen auf das oberflächenmodifizierte Indium-Zinn-Oxohydrat und Indiumzinnoxid vorhanden.

Unter Oberflächenmodifizierung ist zu verstehen, dass organische Moleküle und/oder Bruchstücke solcher Moleküle, die in der Regel nicht mehr als insgesamt 24, insbesondere nicht mehr als insgesamt 18 und besonders bevorzugt nicht mehr als 12 Kohlenstoffatome aufweisen, die über eine kovalente oder ionische Bindung und/oder polare (Dipol-Dipol-Wechselwirkung) oder van-der-Waals-Kräfte an die Partikeloberfläche gebunden sind. Bruchstücke können beispielsweise durch einen teilweisen thermischen Abbau der organischen Moleküle entstehen. In der vorliegenden Erfindung wird die Oberflächenmodifizierung durch den Anteil an Kohlenstoff ausgedrückt.

Unter einer stabilen Dispersion im Sinne der Erfindung ist eine Dispersion zu verstehen, die in einem Druckerkopf eine Stabilität von mindestens 2 Wochen, in der Regel mindestens 4 Wochen aufweist. Innerhalb dieses Zeitraumes bleibt die Dispersion druckbar, Sedimentation oder Flockulation sind vernachlässigbar.

Unter bindemittelfrei im Sinne der Erfindung ist zu verstehen, dass die erfindungsgemäße Dispersion frei von Stoffen ist, die gleich oder verschiedenartige Stoffe miteinander verbinden. Bei den Bindemitteln kann es sich um anorganische, organische, natürliche oder synthetisierte Bindemittel handeln. Das Abbinden erfolgt mittels physikalischem Trocknen, Erstarren oder starkem Viskositätsanstieg, chemischer Reaktion oder Hydratisierung.

Unter einer "mechanisch stabilen Schicht" wird eine Schicht verstanden, die widerstandsfähig gegen Beanspruchung durch kratzende, scharfkantige Gegenstände oder Materialien ist, charakterisiert beispielsweise durch die Stifthärte nach Wolff-Wilborn oder durch die Bleistifthärte nach DIN EN 13523-4: 2001 und die auf dem Substrat haftet, ermittelt beispielsweise durch den *Kreuzschnitt- oder Tape-Test* nach DIN EN ISO 2409.

Unter Flächenwiderstand wird im Folgenden der ohmsche Widerstand verstanden, der an einer Beschichtung mit einer gleichmäßigen Schichtdicke erhalten wird, wenn ein quadratischer Bereich beliebiger Größe an zwei gegenüberliegenden Kanten kontaktiert und der Strom in Abhängigkeit von der (Gleich-)Spannung gemessen wird. Der Flächenwiderstand wird in Ohm gemessen und mit Ohm/sq gekennzeichnet. Die Bestimmung des Flächenwiderstandes kann auch nach anderen Verfahren, wie z.B. der Vierpunktmessung erfolgen.

Unter *Transmission* wird im Folgenden die Durchlässigkeit eines transparenten Körpers für Licht der Wellenlänge 550 nm verstanden. Unter transparent im Sinne der Erfindung ist eine Transmission bei 550 nm von wenigstens 90% zu verstehen.

Gegenstand der Erfindung ist ein oberflächenmodifizierte Indiumzinnoxid-Partikel enthaltende Dispersion, welche frei von Bindemitteln ist, die ein oder mehrere Lösungsmittel und ein oder mehrere Dispergiermittel enthält, wobei
a) die oberflächenmodifizierten Indiumzinnoxid-Partikel
   a1) einen Anteil an Indium von 93 bis 96 Gew.-%, Zinn von 4 bis 7 Gew.-%, Kohlenstoff von 0,01 bis 0,1 Gew.% aufweisen, wobei die Summe dieser Anteile mindestens 99 Gew.-% bezogen auf die Summe von Indium, Zinn und Kohlenstoff ist,
   a2) auf der xy-Farbskala Werte von x = 0,300 bis 0,320 und y-Werte von y = 0,330 bis 0,360,
   a3) eine BET-Oberfläche von 30 bis 100 m²/g,
   a4) einen Pulverwiderstand von 0,5 bis 5 Ohm·cm aufweisen, und
   a5) mit einem Anteil von 10 bis 40 Gew.-%, bevorzugt 20 bis 30 Gew.-%, in der Dispersion vorliegen und wobei
b) das Dispergiermittel
   b1) ausgewählt ist aus der Gruppe der Oligoether und/oder Polyether und
   b2) mit einem Anteil von 0,5 bis 10 Gew.-%, bevorzugt 2 bis 8 Gew.-%, in der Dispersion vorliegt.

Der mittlere Durchmesser d₅₀ der Indiumzinnoxid-Partikel in der erfindungsgemäßen Dispersion beträgt bevorzugt < 1 µm, besonders bevorzugt < 500 nm und ganz besonders bevorzugt 10 bis 250 nm. Gemeint ist hiermit der mittlere Durchmesser der in der Dispersion vorliegenden Partikel, im wesentlichen in Form von Aggolomeraten, und nicht den beispielsweise aus Röntgendiffraktometrie bestimmbare Primärpartikeldurchmesser.

Die erfindungsgemäße Dispersion kann weiterhin bevorzugt eine Viskosität bei 23°C von 20 mPa·s oder weniger, besonders bevorzugt eine von 8 bis 12 mPa·s aufweisen.

### Herstellung der in der erfindungsgemäßen Dispersion vorliegenden oberflächenmodifizierten Indiumzinnoxid-Partikel

Die oberflächenmodifizierten Indiumzinnoxid-Partikel sind erhältlich durch ein Verfahren bei dem man ein oberflächenmodifiziertes Agglomerat von Indium-Zinn-Oxohydrat bei Temperaturen von mehr als 150°C und weniger als 310°C an der Luft trocknet und nachfolgend unter reduzierenden Bedingungen, beispielsweise in Gegenwart von Formiergas, calciniert. Die Calcinierung wird zweistufig durchgeführt, wobei der zweite Calcinierungsschritt bei einer höheren Temperatur durchgeführt wird als der erste. Die zweistufige Calcinierung umfasst die Schritte
· Behandlung bei Temperaturen von 240°C bis 260°C unter reduzierenden Bedingungen,
· Abkühlen auf Raumtemperatur und lagern an der Luft, nachfolgend
· Behandlung bei Temperaturen von 270°C bis 310°C unter reduzierenden Bedingungen.

Die einzelnen Behandlungsschritte können über einen Zeitraum von jeweils 0,5 bis 8 Stunden durchgeführt werden.

### Indium-Zinn-Oxohydrat als Ausgangsstoff zur Herstellung der in der erfindungsgemäßen Dispersion eingesetzten oberflächenmodifizierten Indiumzinnoxid-Partikel.

Das eingesetzte oberflächenmodifiziertes Agglomerat von weist einen Anteil an
· Indium, gerechnet als In, von 93 bis 96 Gew.-%,
· Zinn, gerechnet als Sn, von 4 bis 7 Gew.-%,
· Kohlenstoff von 0,01 bis 0,1 Gew.-% auf,
· wobei die Summe dieser Anteile mindestens 99 Gew.-% bezogen auf die Summe von Indium, Zinn und Kohlenstoff ist.

Die Agglomerate weisen einen mittleren Aggregatdurchmesser von 5 bis 50 µm, bevorzugt 10 bis 20 µm, auf und lassen sich durch einfache Dispergierung überwiegend oder vollständig in Primärpartikel zerteilen. Die BET-Oberfläche der Agglomerate von Indium-Zinn-Oxohydrat beträgt bevorzugt 50 bis 200 m²/g und besonders bevorzugt 80 bis 140 m²/g.

Das oberflächenmodifizierte Agglomerat von Indium-Zinn-Oxohydrat ist erhältlich, indem man
a) eine wässerige Lösung, welche Indium- und ZinnVerbindungen und ein oder mehrere oberflächenmodifizierende Komponenten enthält, auf einen pH-Wert von 3,5 bis 4,5 einstellt, von gelösten Reaktionsprodukten und nicht umgesetzten Einsatzstoffen des Reaktionsgemisches abtrennt, und
b) die erhaltene Dispersion einer Sprühtrocknung unterzieht.

Geeignete Indiumverbindungen sind Indiumchlorid, Indiumiodid, Indiumnitrat, Indiumacetat, Indiumsulfat, Indiumalkoxide, wie Indiummethoxid oder Indiumethoxid, oder Mischungen davon, wobei Indium in der Oxidationsstufe +3 oder beim Chlorid und Iodid auch in der Oxidationsstufe +1 vorliegt.
Geeignete Zinnverbindungen sind Zinnchlorid, Zinnsulfat, Zinnalkoxide, wie Zinnmethoxid oder Zinnethoxid, oder Mischungen davon, wobei Zinn in der Oxidationsstufe +2 oder +4 vorliegt.
Bevorzugt können Gemische von Indiumtrichlorid (InCl₃) und Zinnchlorid (SnCl₂) eingesetzt werden.

Geeignete oberflächenmodifizierende Komponenten sind
· gesättigte oder ungesättigte Mono -und Polycarbonsäuren (vorzugsweise Monocarbonsäuren) mit 1 bis 24 Kohlenstoffatomen, wie zum Beispiel Ameisensäure, Essigsäure, Propionsäure, Buttersäure, Pentansäure, Hexansäure, Acrylsäure, Methacrylsäure, Crotonsäure, Citronensäure, Adipinsäure, Bernsteinsäure, Glutarsäure, Oxalsäure, Maleinsäure, Fumarsäure, Itaconsäure, Stearinsäure und insbesondere 3,6,9-Trioxadecansäure sowie die entsprechenden Anhydride;
· Mono- und Polyamine, insbesondere solche der allgemeinen Formel R₃₋ₙNHₙ, worin n = 0, 1 oder 2 ist und die Reste R unabhängig voneinander Alkylgruppen mit 1 bis 12, insbesondere 1 bis 6 und besonders bevorzugt 1 bis 4 Kohlenstoffatomen darstellen, beispielsweise Methyl, Ethyl, n-und i-Propyl und Butyl; Polyethylenamine;
· Säureamide, insbesondere Caprolactam;
· Aminosäuren, insbesondere β-Alanin, Glycin, Valin, Aminocapronsäure, Leucin und Isoleucin;
· Dicarbonylverbindungen mit 4 bis 12, insbesondere 5 bis 8 Kohlenstoffatomen, wie zum Beispiel Acetylaceton, 2,4-Hexandion, 3,5-Heptandion, Acetessigsäure, Acetessigsäure-C₁-C₄-Alkylester wie Acetessigsäureethylester, Diacetyl und Acetonylaceton;
· Tenside, z. B. kationische, anionische, nicht-ionische und amphotere Tenside. Bevorzugt werden nicht-ionische Tenside, wobei Polyethylenoxid-Derivate besonders bevorzugt sind. Es kann sich dabei um Derivate mit gesättigten oder ungesättigten (Mono)carbonsäuren handeln, insbesondere mit Carbonsäuren mit mehr als 7, bevorzugt mehr als 11 Kohlenstoffatomen, beispielsweise Polyethylenoxid-Derivate mit Stearin-, Palmitin- oder Ölsäure. Es kann sich auch um Derivate mit Sorbitanestern handeln, wobei als Carbonsäure beispielsweise die vorstehend genannten in Frage kommen. Weiter können Polyethylenoxid(mono)alkylether, beispielsweise mit Alkoholen mit mehr als 7, bevorzugt mehr als 11 Kohlenstoffatomen.

Die oberflächenmodifizierenden Komponenten können einzeln oder als Mischung eingesetzt werden. Besonders bevorzugte Verbindungen sind 3,6,9-Trioxadecansäure, β-Alanin und Caprolactam.
Der Anteil der eingesetzten oberflächenmodifizierenden Komponente beträgt, bezogen auf die Summe der eingesetzten Indium- und Zinnverbindung, bevorzugt 2 bis 30 Gew.-%, besonders bevorzugt 2 bis 6 Gew.-%.
Der pH-Wert im Bereich von 3,5 bis 4,5 kann beispielsweise durch primäre, sekundäre, tertiäre aliphatische oder aromatische Amine, Tetramethylammoniumhydroxid, NaOH, KOH, Ammoniak, Ammoniumhydroxid oder Mischungen davon eingestellt werden. Besonders bevorzugt wird Ammoniumhydroxid eingesetzt. Es hat sich als vorteilhaft erwiesen, das Reaktionsgemisch 1 bis 24 Stunden in diesem pH-Wertebereich zu belassen. Anschließend ist es vorteilhaft einen pH-Wert von 9 bis 9,5 einzustellen. Dies kann durch die gleichen Verbindungen erfolgen, die auch bei der Einstellung auf den pH-Wertebereich von 3,5 bis 4,5 eingesetzt wurden.
Vorteilhafterweise werden die bei der Reaktion erzeugten Salze aus dem Reaktionsgemisch abgetrennt. Hierzu hat sich, insbesondere für die Abtrennung von Ammoniumsalzen, eine Querstromfiltration bewährt, die so durchgeführt werden kann, dass die Leitfähigkeit der Dispersion bevorzugt kleiner als 5000 µS/cm, bevorzugt kleiner als 2000 µS/cm ist.
Nachfolgend kann das Reaktionsgemisch beispielsweise durch Verdampfen aufkonzentriert werden.
Der Feststoffanteil der Dispersion, die der Sprühtrocknung zugeführt wird, beträgt bevorzugt 10 bis 50 Gew.-%, bezogen auf die Dispersion.
Die Sprühtrocknung wird bevorzugt bei Temperaturen von 100 bis 150°C durchgeführt.

Neben der Herstellung des Indium-Zinn-Oxohydrates als Ausgangsmaterial für die in der erfindungsgemäßen Dispersion vorliegenden oberflächenmodifizierten Indiumzinnoxid-Partikel sind Dispergiermittel auch wesentlicher Bestandteil der erfindungsgemäßen Dispersion.

Diese werden ausgewählt aus der Gruppe der Oligoether und/oder Polyether. Ein bevorzugter Oligoether kann die 3,6,9-Trioxadecansäure sein. Bevorzugte Polyether können Polyethylenoxid-Derivate sein, insbesondere Derivate mit gesättigten oder ungesättigten (Mono)carbonsäuren, insbesondere mit Carbonsäuren mit mehr als 7, bevorzugt mehr als 11 Kohlenstoffatomen, beispielsweise Polyethylenoxid-Derivate mit Stearin-, Palmitin- oder Ölsäure. Weiterhin können auch Polyethylenoxid(mono) alkylether, beispielsweise mit Alkoholen mit mehr als 7, bevorzugt mehr als 11 Kohlenstoffatomen Bestandteil der erfindungsgemäßen Dispersion sein.

Als Dispergiermittel besonders bevorzugt sind Block-Polymethacrylsäureester-Block-Polyalkylenoxid-Copolymere mit terminaler Carbonsäure der allgemeinen Formel 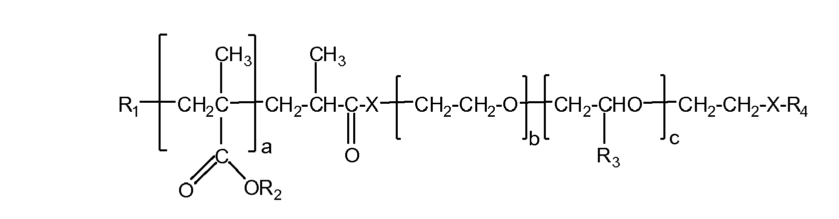 wobei
- R₁: der Rest eines an sich bekannten Kettenreglers oder Initiators ist, der frei von aktiven Wasserstoffatomen ist,
- R₂: gleich oder verschieden sind und Alkylreste mit 1 bis 22 Kohlenstoffatomen oder ggf. auch substituierte Arylreste, Perfluoralkyl- oder Dialkylaminoreste, bevorzugt ein Alkylrest mit 1 bis 4 Kohlenstoffatomen, besonders bevorzugt Methyl und Butyl, bedeuten,
- R₃: gleich oder verschieden sind und Alkylreste mit 1 bis 4 Kohlenstoffatomen oder Phenylreste, bevorzugt eine Methyl- oder Phenylgruppe, bedeuten,
- R₄: einen organischen Rest mit mindestens einer Carbonsäure- bzw. Carboxylatfunktion, bevorzugt Produkte aus der Umsetzung von Alkoholen mit Anhydriden, besonders bevorzugt Bernsteinsäureanhydrid, Maleinsäureanhydrid, Phthalsäureanhydrid und Trimellitsäureanhydrid, besonders bevorzugt den Rest -C(O)CH₂CH₂COOH, darstellt,
- X: Sauerstoff oder NH, bevorzugt Sauerstoff, ist,
- a: ein Wert von 4 bis 20, bevorzugt 6 bis 15, ist
- b: ein Wert von 20 bis 100 und
- c: einen Wert von 0 bis 20 hat, wobei das Verhältnis b/c >= 4, bevorzugt c = 0 ist.

Der Rest R₁ ist ein an sich bekannter Kettenregler oder Initiator. Als dem Stand der Technik entsprechend seien Azoverbindungen oder Peroxide beispielhaft genannt. Beispiele für Kettenregler sind Mercaptane, Chloroform, Isopropylbenzol oder Isopropanol. Bevorzugt für R₁ ist der Rest -S-C₁₂H₂₅. Weitere Beispiele für Reste, die vom Kettenregler herrühren, sind der von tert.-Dodecylmercaptan abgeleitete Rest und der Octadecylrest und der Tetradecylmercaptanrest.

Beispiele von Blockcopolymeren sind:

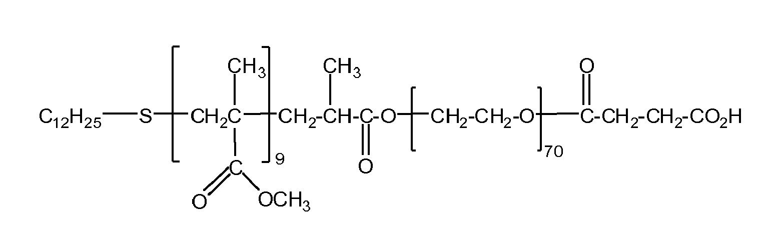

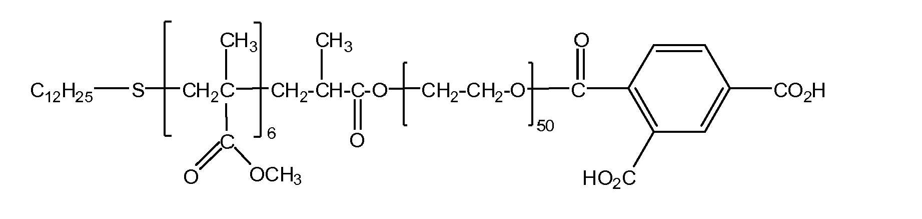

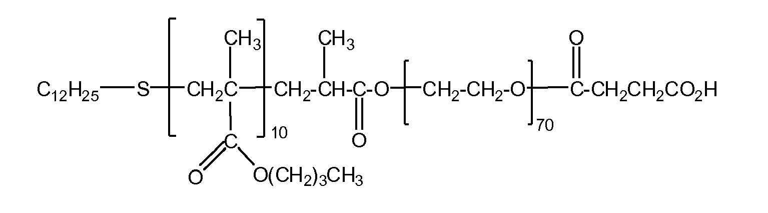

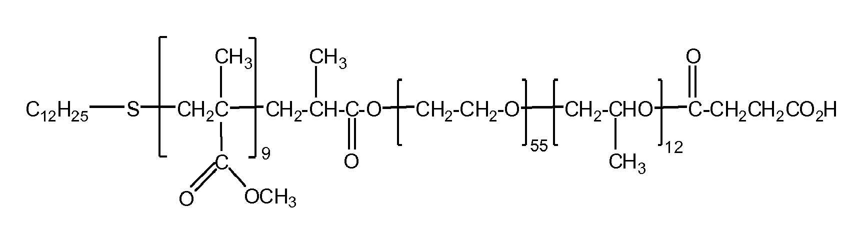

Vorteilhafterweise kann es sich um ein Maleinsäureanhydrid Copolymer einem Molekulargewicht von 11000-15000 handeln.

Das Blockpolymer kann auch in Form einer wässerigen Lösung vorliegen.

Die erfindungsgemäße Dispersion umfasst weiterhin ein oder mehrere Lösungsmittel. Diese sind in der Regel organisch. Es kann jedoch auch Wasser in der erfindungsgemäßen Dispersion vorliegen, in Mengen bei denen die flüssige Phase der Dispersion homogen bleibt. Bevorzugt können Alkohole, Monoalkylether von Polyolen, Ester, Ether und Ketone sein.

Geeignete Alkohole können sein: Methanol, Ethanol, n-Propanol, i-Propanol, n-Butanol, i-Butanol, sec-Butanol, tert.-Butanol, n-Pentanol, i-Pentanol, 2-Methylbutanol, sec-Pentanol, tert.-Pentanol, 3-Methoxybutanol, n-Hexanol, 2-Methylpentanol, sec-Hexanol, 2-Ethylbutanol, sec-Heptanol, 3-Heptanol, n-Octanol, 2-Ethylhexanol, sec-Octanol, n-Nonylalkohol, 2,6-Dimethylheptanol-4, n-Decanol, sec-Undecylalkohol, Trimethylnonylalkohol, sec-Tetradecylalkohol, sec-Heptadecylalkohol, Phenol, Cyclohexanol, Methylcyclohexanol, 3,3,5-Trimethylcyclohexanol, Benzylalkohol, Diacetonalkohol, Ethylenglykol, 1,2-Propylenlycol, 1,3-Butylenglykol, 2,4-Pentandiol, 2-Methyl-2,4-Pentandiol, 2,5-Hexandiol, 2,4-Heptandiol, 2-Ethyl-1,3-Hexandiol, Diethylenglykol, Dipropylenglykol, Hexandiol, Octandiol, Triethylenglykol, Tripropylenglykol und Glycerin.

Geeignete Monoalkylether von Polyolen können sein: Ethylenglykolmonomethylether, Ethylenglykolmonoethylether, Ethylenglykolmonopropylether, Ethylenglykolmonobutylether, Ethylenglykolmonohexylether, Ethylenglykolmonophenylether, Ethylenglykolmono-2-Ethylbutylether, Diethylenglykolmonomethylether, Diethylenglykolmonoethylether, Diethylenglykolmonopropylether, Diethylenglykolmonobutylether, Diethylenglykolmonohexylether, Propylenglykolonomethylether, Propylenglykolmonoethylether, Propylenglykolmonopropylether, Propylenglykolmonobutylether, Dipropylenglykolmonomethylether, Dipropylenglykolmonoethylether und Dipropylenlycolmonopropylether.

Geeignete Ester können sein: Diethylcarbonat, Ethylencarbonat, Propylencarbonat, Methylacetat, Ethylacetat, gamma-Butyrolacton, gamma-Valerolacton, n-Propylacetat, iso-Propylacetat, n-Butylacetat, iso-Butylacetat, sec-Butylacetat, n-Pentylacetat, sec-Pentylacetat, 3-Methoxybutylacetat, Methylpentylacetat, 2-Ethylbutylacetat, 2-Ethylhexylacetat, Benzylacetat, Cyclohexylacetat, Methylcyclohexylacetat, n-Nonylacetat, Methylacetoacetat, Ethylacetoacetat, Ethylenglykolmonomethyletheracetat, Ethylenglykolmonoethyletheracetat, Diethylenglykolmonomethyletheracetat, Diethylenglykolmonoethyletheracetat, Diethylenglykolmono-n-Butyletheracetat, Propylenglykolmonomethyletheracetat, Propylenglykolmonoethyletheracetat, Propylenglykolmonopropyletheracetat, Propylenglykolmonobutyletheracetat, Dipropylenglykolmonomethyletheracetat, Dipropylenglykolmonoethyletheracetat, Glykoldiacetat, Methoxytriglykolacetat, Ethylpropionat, n-Butylpropionat, iso-Amylpropionat, Diethyloxalat, Di-n-Butyloxalat, Methyllactat, Ethyllactat, n-Butyllactat, n-Amyllactat, Diethylmalonat, Dimethylphthalat und Diethylphthalat.

Geeignete Ether können sein: Dipropylether, Diisopropylether, Dioxan, Tetrahydrofuran, Tetrahydropyran, Ethylenglykoldimethylether, Ethylenglykoldiethylether, Ethylenglykoldipropylether, Propylenglykoldimethylether, Propylenglykoldiethylether, Propylenglykoldipropylether, Diethylenglykoldimethylether, Diethylenglykoldiethylether und Diethylenglykoldipropylether.

Geeignete Ketone können sein: Aceton, Methylethylketon, Methyl-n-propylketon, Methyl-n-butylketon, Diethylketon, Methyl-iso-butylketon, Methyl-n-pentylketon, Ethyl-n-butylketon, Methyl-n-hexylketon, Di-1-butylketon, Trimethylnonanon, Cyclohexanon, 2-Hexanon, Methylcyclohexanon, 2,4-Pentandion, Acetonylaceton, Acetophenon, Acetylaceton, 2,4-Hexandion, 2,4-Heptandion, 3,5-Heptandion, 2,4-Octandion, 3,5-Octandion, 2,4-Nonandion, 3,5-Nonandion, 5-Methyl-2,4-hexandion und 2,2,6,6-Tetramethyl-3,5-heptandion.

Besonders bevorzugt sind Lösungsmittel ausgewählt ist aus der Gruppe bestehend aus Ethanol, Isopropoxyethanol, Propylenglykolphenylether, Propandiole wie 1,2-Propandiol und 1,3-Propandiol, Diacetonalkohol, Diethylenglycol und Butandiole wie 1,4 Butandiol.

Die Lösungsmittel sind einzeln oder in Kombination einsetzbar.

Der Gehalt an Lösungsmittel kann bevorzugt 55 bis 84 Gew.-%, bezogen auf die Dispersion, betragen.

Ein vorteilhafte erfindungsgemäße Dispersion umfasst
- 20 bis 30 Gew.-%, bevorzugt 22 bis 27 Gew.-%, oberflächenmodifizierte Indiumzinnoxid-Partikel
- 50 bis 70 Gew.-%, bevorzugt 55 bis 65 Gew.-% Isopropoxyethanol,
- 1 bis 10 Gew.-%, bevorzugt 5 bis 8 Gew.-%, Diethylenglykol,
- 1 bis 5 Gew.-%, bevorzugt 2 bis 4 Gew.-%, eines Block-Polymethacrylsäureester-Block-Polyalkylenoxid-Copolymeren mit terminaler Carbonsäure bei der der Rest R₄ der allgemeinen Formel -C(O)CH₂CH₂COOH ist und ein Molekulargewicht von 11000-15000 aufweist, und
- 1 bis 5 Gew.-%, bevorzugt 2 bis 4 Gew.-%, Wasser.

Ein weitere vorteilhafte, erfindungsgemäße Dispersion umfasst
- 20 bis 30 Gew.-%, bevorzugt 22 bis 27 Gew.-%, oberflächenmodifizierte Indiumzinnoxid-Partikel
- 50 bis 75 Gew.-%, bevorzugt 55 bis 65 Gew.-% Diacetonalkohol
- 1 bis 10 Gew.-%, bevorzugt 3 bis 6 Gew.-%, Diethylenglykol und
- 0,2 bis 2 Gew.-%, bevorzugt 0,5 bis 1,5 Gew.-% 3,6,9-Trioxadecansäure.

Ein weiterer Gegenstand der Erfindung ist ein Verfahren zur Beschichtung eines Substrates bei dem man die erfindungsgemäße Dispersion mittels eines strukturierenden Verfahrens auf das Substrat aufbringt, die flüssigen Bestandteile der Dispersion teilweise oder weitestgehend vollständig entfernt und die erhaltene Schicht thermisch oder mittels einer Mikrowelle, Lichtquelle oder eines Lasers gesintert.

Als Substrate können transparente Materialien wie Quarzglas, Borosilikat, Displayglas, alkalifreies Borosilikat Displayglas, Weißglas, Fensterglas, Floatglas, Polyester, Polyamid, Polyimid, Polyacrylat, Polycarbonat (PC), Polyethersulfon (PES), Polyetheretherketon (PEEK), Polyvinylchlorid (PVC), Polyethylen (PE), Polypropylen (PP), Polyacetal (POM), Polyethylenterephthalat (PET), Polyethylennaphthalat (PEN), Polybutylenterephthalat (PBT), Polyhydroxybutyrat (PHB), Polyamid 6, Polyamid 6.6, Polyamid 11, Polyamid 12, Kapton® Polymethylmethacrylat (PMMA) oder eine Kombination dieser Materialien eingesetzt werden. Ganz besonders bevorzugt können diese Materialien oder eine Kombination dieser Materialien in Form von Folien und/oder Laminaten eingesetzt werden.

Geeignete strukturierende Verfahren können Inkjet-Druck, Offsetdruck, Gravur/ Tiefdruck, Thermotransferdruck, Laserdruck, Flexodruck oder Tampondruck sein.

Dabei wird die flüssige Phase der auf das Substrat aufgebrachten Dispersion teileweise oder weitestgehend vollständig entfernt. Dies kann bei Temperaturen von 20°C bis 180°C, bevorzugt von 50°C bis 130°C, besonders bevorzugt von 60°C bis 120°C während einer Zeitdauer von 1 s bis 60 min durch Trocknen erfolgen. Die flüssige Phase kann zum Beispiel durch Eintrag elektromagnetischer Energie oder durch Kontakt des Substrates mit einer Heizplatte, in einem Rolle-zu-Rolle Prozess bevorzugt durch Kontakt mit zumindest einer erwärmten Rolle oder Kalander entfernt werden. Weiterhin bevorzugt kann das Lösungs- oder Dispersionsmittel durch Bestrahlung mit IR-, VIS-, oder UV-Licht, zum Beispiel mittels Halogenstrahler oder im IR-Bereich emittierender Laser, in einem Trockenofen, oder durch Bespülen mit erwärmter Luft oder Inertgas entfernt werden. Besonders bevorzugt kann die flüssige Phase der Dispersion durch zumindest ein Verfahren entfernt werden, das in einem Rolle-zu-Rolle Prozess integriert werden kann. Besonders bevorzugt können berührungslose Verfahren sein, ganz besonders bevorzugt IR-Strahler. Bis zu 99 % des Lösungs- oder Dispersionsmittels können vorzugsweise entfernt werden.

Nach dem Trocknen kann eine Schichtdicke von 0,05 bis 100 µm, bevorzugt von 0,1 bis 75 µm, weiterhin bevorzugt von 0,5 bis 50 µm, besonders bevorzugt von 1 bis 30 µm erhalten werden.

Nach dem Entfernen der flüssigen Phase wird die Schicht während einer Zeitdauer zwischen 5 min und 2 Stunden bei thermisch bei Temperaturen zwischen 200°C und 600°C unter reduzierenden Bedingungen, beispielsweise in einer Formiergasatmosphäre, gesintert.

Alternativ kann der Sintervorgang mittels eines Lasers, beispielsweise mit einer Wellenlänge von 157 nm bis 10600 nm und mit einer mittleren Leistung von 5 W bis 5 kW, kontinuierlich oder gepulst, erfolgen.

Ein weiterer Gegenstand der Erfindung ist ein beschichtetes, transparentes und leitfähiges Substrat erhältlich gemäß des erfindungsgemäßen Verfahrens.

Ein weiterer Gegenstand der Erfindung ist die Verwendung der erfindungsgemäßen Dispersion oder des erfindungsgemäßen, beschichteten Substrates zur Herstellung elektronischer Bauteile umfassend ein organisches, lichtemittierendes Bauteil (OLED), ein Elektrolumineszenzmodul, ein photovoltaisches Element, einen berührungssensitiven Bildschirm, ein Widerstandsheizelement, ein Infrarotschutzfilm, ein antistatisches Gehäuse, einen chemischen Sensor, einen elektromagnetischen Sensor, FKD (Flüssigkristalldisplay), einen Flüssigkristallbildschirm oder eine Flüssigkristallanzeige (LCD) und ein elektrophoretisches Display.

### Beispiele

### Herstellung der oberflächenmodifizierten Indiumzinnoxid-Partikel

151,1 kg Indium(III) chlorid, 12,6 kg Zinn(IV)chlorid · 5 H₂0 und 6,25 kg Caprolactam werden in 460,4 kg Wasser gegeben und gerührt. Nachdem eine klare Lösung entstanden ist, wird diese auf 50°C erwärmt. Nachfolgend tropft man unter Rühren 122,8 kg Ammoniumhydroxidlösung (25%ig) zu. Die Suspension wird weitere 24 Stunden gerührt. Anschließend werden noch 208,52 kg Ammoniumhydroxidlösung hinzugefügt. Ammoniumchlorid wird durch Querstromfiltration abgetrennt: Permeatfluß 260 - 300 kg/m²h. Die Leitfähigkeit der Suspension beträgt 1018 µS/cm. Anschließend wird die flüssige Phase durch Sprühtrocknung abgetrennt. Hierzu werden 20 l/h der nach der Abtrennung von Ammoniumchlorid erhaltenen Suspension mit einem Feststoffgehalt von 9,6 Gew.-% mit Hilfe von 8 Nm³/h Luft in einen Trockner (Betriebstemperatur 300°C, Konustemperatur 110°C, Ablufttemperatur 115°C) verdüst. Es werden Agglomerate von Indium-Zinn-Oxohydrat mit einem Anteil an In von 94,96 Gew.-%, an Sn von 4,99 Gew.-% und an C von 0,042 Gew.-% erhalten. Die BET-Oberfläche (nach DIN 66131) beträgt 121 m²/g, die Stampfdichte (in Anlehnung an DIN EN ISO 787/11) 684 g/l, der Trocknungsverlust (2 h bei 105 °C) 4,4 Gew.-%, der Glühverlust (2 Stunden bei 1000°C) 18,0 Gew.-%, der d₅₀⁵⁾-Wert (Cilas) 12,8 µm.
Die Agglomerate werden zunächst bei 300°C über einen Zeitraum von 1 h an der Luft getrocknet und nachfolgend in einem Ofen bei einer Temperatur von 250°C über einen Zeitraum von 1 h in einer Formiergasatmosphäre gehalten. Nach dem Abkühlen auf Raumtemperatur wird der Feststoff bei Raumtemperatur über einen Zeitraum von 8 h an der Luft gelagert und nachfolgend bei einer Temperatur von 275°C über einen Zeitraum von 1 h in einer Formiergasatmosphäre gehalten.

Die erhaltenen oberflächenmodifizierten Indiumzinnoxid-Partikel weisen einen Anteil an In von 94,98 Gew.-%, an Sn von 4,99 Gew.-% und an C von 0,025 Gew.-% auf. Die Kristallphase ist kubisch. Die BET-Oberfläche (nach DIN 66131) beträgt 68 m²/g, der Pulverwiderstand 1 Ohm·cm, die Stampfdichte (in Anlehnung an DIN EN ISO 787/11) 1035 g/l und der xy-Farbwert 0,309/0,339.

### Herstellung von erfindungsgemäßen Dispersionen

Oberflächenmodifiziertes Indiumzinnoxid-Partikel werden in einem Vertikal-Schüttelgerät, einem Lau Disperser der Firma Lau, 4 h lang unter Zusatz von Zirkonoxidperlen, Typ SAZ 0,4-0,6 mm, Fa. Mühlmeier, in einer flüssigen Phase bestehend aus einem Lösungsmittelgemisch und einem oder mehreren Dispergiermitteln dispergiert. Die Zirkonoxidperlen wurden anschliessend durch ein Sieb abfiltriert. Die Dispersion wird unmittelbar nach diesem Vorgang mittels Metallsieb filtriert und anschließend 5 Minuten mit 4000 Umdrehungen pro Minute zentrifugiert.

Gemäß dieser allgemeinen Vorschrift werden die erfindungsgemäßen Dispersionen 1 bis 7 hergestellt, deren Zusammensetzung in Tab.1 wiedergegeben ist.

**Tab.1: Erfindungsgemäße Dispersionen (Angaben in Gew.-%)**

| **Dispersion** | **1** | **2** | **3** | **4** | **5** | **6** | **7** |
|---|---|---|---|---|---|---|---|
| **ITO** | 25 | 25 | 25 | 25 | 25 | 25 | 33 |
| **TODS*** | 0,8 | - | - | - | 0,9 | 0,9 | 1,2 |
| **Tego 752 W** | - | 6,4 | 6,4 | 6,4 | - | - | - |
| **Isopropoxyethanol** | 8 | 60,6 | 60,6 | - | - | - | - |
| **Ethanol** | 26,2 | 8 | - | - | - | - | - |
| **Dowanol PPh** | 40 | - | - | - | - | - | - |
| **Dietyhlenglykol** | - | - | 8 | - | - | 4 | - |
| **Diacetonalkohol** | - | - | - | 60,6 | 70,1 | 70,1 | 62,3 |
| **1,4-Butandiol** | - | - | - | 8 | 4 | - | 3,5 |

| | | | | | | | |
|---|---|---|---|---|---|---|---|
| * TODS = 3,6,9-Trioxadecancarbonsäure | | | | | | | |

### Nachbehandlung

Zum Test der Widerstandswerte werden die Dispersionen mittels eines InkJet Druckers (Pixdro LabP150) auf Fensterglas gedruckt. Im Anschluss werden die Platten in einen Ofen bei 120° C für 1 Stunde getrocknet und dann bei 550°C 2h lang im Muffelofen gesintert.

Die gesinterten Proben werden mit 5 Vol-% Wasserstoff, 95 Vol-% Stickstoff (100 l/h) in einem Röhrenofen formiert. Die Formierung findet bei 300 °C statt und geht über einen Zeitraum von 3,5h, wobei die Temperatur über einen Zeitraum von 2 Stunden bei konstant 300°C gehalten wird .

Die Dispersionen 1 bis 6 wurden mit einem Kopf Xarr Omnidot heat gedruckt. Die Dispersionen 1,2 und 4 mit der Serial No 27772-01, die Dispersion 3 mit der Serial No 32625-10, die Dispersionen 5 und 6 mit der Serial No 32697-03. Die Waveform war bei allen Drucken B323, die Mask File QF 4, 1*1a, Step 141. Der Voffset ROW 1/ROW 2 bei den Dispersionen 1 und 2 ist 1,9375/1,8125, bei der Dispersion 3 -5,5/-4,8125, bei der Dispersion 4 -5,0625/-5,1875 und bei den Dispersionen 5 und 6 -4,1875/-3,75.

Die Dispersion 7 wurde gedruckt mit Spectra SE 128 Head S/N 34107j00934, Pulse width 80V.

Der Druck war bei allen Dispersionen -32 mbar, die Motion Speed 200 mm/s, mit Ausnahme von Dispersion 7 mit 100 mm/s.

Tabelle 2 zeigt die mit den Dispersionen 1 bis 7 erhaltenen Widerstandswerte.

**Tab. 2: Elektrischer Widerstand***

| **Dispersion** | **gesintert** | **formiert** |
|---|---|---|
| **1** | 5,48 kOhm/sq | 530 Ohm/sq |
| **2** | 230 kOhm/sq | 23 KOhm/sq |
| **3** | 3,44 kOhm/sq | 300 Ohm/sq |
| **4** | 3,13 kOhm/sq | 251 Ohm/sq |
| **5** | 9,30 kOhm/sq | 215 Ohm/sq |
| **6** | 2,29 kOhm/sq | 192 Ohm/sq |
| **7** | 1,28 kOhm/sq | 128 Ohm/sq |

| | | |
|---|---|---|
| * Vierpunkt-Widerstandsmessgerät Lucas Lab, Signatone Corp. | | |

### Rauigkeit

Von der mit der Dispersion 7 erhaltenen Probe wurde Rauigkeituntersucungen mittels AFM durchgeführt. Es wurde je 3 x eine Fläche von 10 µm x 10 µm eingescannt und die in Tabelle 3 gezeigten Rauigkeitsparameter für 100 µm² und 4 µm² berechnet. Zusätzlich wurde zum Vergleich die größte mögliche Fläche von 90 µm x 90 µm gescannt.

**Tab. 3: Rauigkeitsparamter R_{q} und Rₘₐₓ der mit der Dispersion 7 erhaltenen Probe bei 4 µm², 100 µm² und 8100 µm^{2;} Werte in nm**

| **R_{q} 4 µm²** | **R_{q} 100 µm²** | **Rₘₐₓ 4 µm²** | **Rₘₐₓ 100 µm²** | **R_{q} 8100 µm²** | **Rₘₐₓ 8100 µm²** |
|---|---|---|---|---|---|
| 6,2 | 4,5 | 48 | 29 | 6,5 | 66 |
| 6,1 | 6,4 | 47 | 39 | | |
| 5,9 | 5,0 | 46 | 29 | | |

Weiterhin wurden Widerstandswerte von erfindungsgemäßen Dispersionen und solchen bei denen Indiumzinnoxid-Partikel gemäß dem Stand der Technik eingesetzt wurden nach dem Trocknen bei 120°C verglichen. Unter Indiumzinnoxid-Partikeln gemäß dem Stand der Technik sind solche zu verstehen, die über einen Fällungsprozess und nachfolgender einstufiger Calcinierung bei 300°C erhalten wurden. Bei den erfindungsgemäßen Dispersionen werden Indiumzinnoxid-Partikel eingesetzt, die durch einen zweifachen Calcinierungsschritt erhalten wurden. Die Widerstandswerte der Proben, die mittels der erfindungsgemäßen Dispersionen erhalten werden, sind ca. 30 bis 60% niederiger als die nach dem Stand der Technik.

## Patentansprüche

1. Oberflächenmodifizierte Indiumzinnoxid-Partikel enthaltende Dispersion, welche frei von Bindemitteln ist, **dadurch gekennzeichnet, dass** sie ein oder mehrere Lösungsmittel und ein oder mehrere Dispergiermittel enthält, wobei
a) die oberflächenmodifizierten Indiumzinnoxid-Partikel
a1) einen Anteil an Indium von 93 bis 96 Gew.-%, Zinn von 4 bis 7 Gew.-%, Kohlenstoff von 0,01 bis 0,1 Gew.% aufweisen, wobei die Summe dieser Anteile mindestens 99 Gew.-% bezogen auf die Summe von Indium, Zinn und Kohlenstoff ist,
a2) auf der xy-Farbskala Werte von x = 0,300 bis 0,320 und y-Werte von y = 0,330 bis 0,360,
a3) eine BET-Oberfläche von 30 bis 100 m²/g,
a4) einen Pulverwiderstand von 0,5 bis 5 Ohm·cm aufweisen, und
a5) mit einem Anteil von 10 bis 40 Gew.-% in der Dispersion vorliegen und wobei
b) das Dispergiermittel
b1) ausgewählt ist aus der Gruppe der Oligoether und/oder Polyether und
b2) mit einem Anteil von 0,5 bis 10 Gew.-% in der Dispersion vorliegt.

2. Dispersion nach Anspruch 1, **dadurch gekennzeichnet, dass** der mittlere Durchmesser d₅₀ der Indiumzinnoxid-Partikel < 1 µm ist.

3. Dispersion nach den Ansprüchen 1 oder 2, **dadurch gekennzeichnet, dass** ihre Viskosität 20 mPa·s oder weniger bei 23°C ist.

4. Dispersion nach den Ansprüchen 1 bis 3, **dadurch gekennzeichnet, dass** das Dispergiermittel ein Block-Polymethacrylsäureester-Block-Polyalkylenoxid-Copolymeres mit terminaler Carbonsäure der allgemeinen Formel 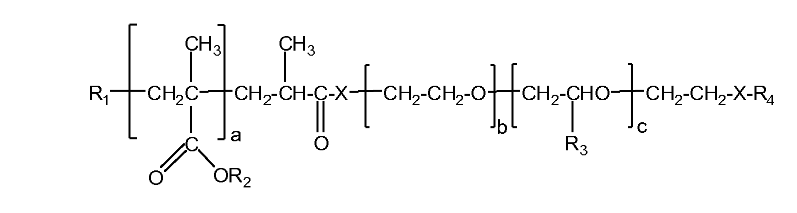 wobei
R₁ der Rest eines an sich bekannten Kettenreglers oder Initiators ist, der frei von aktiven Wasserstoffatomen ist,
R₂ gleich oder verschieden sind und Alkylreste mit 1 bis 22 Kohlenstoffatomen oder ggf. auch substituierte Arylreste, Perfluoralkyl- oder Dialkylaminoreste bedeuten,
R₃ gleich oder verschieden sind und Alkylreste mit 1 bis 4 Kohlenstoffatomen oder Phenylreste bedeuten,
R₄ einen organischen Rest mit mindestens einer Carbonsäure- bzw. Carboxylatfunktion darstellt,
X Sauerstoff oder NH ist,
a ein Wert von 4 bis 20 ist
b ein Wert von 20 bis 100 und
c einen Wert von 0 bis 20 hat, wobei das Verhältnis b/c >= 4, bevorzugt c = 0 ist.

5. Dispersion nach den Ansprüchen 1 bis 4, **dadurch gekennzeichnet, dass** das Lösungsmittel Ethanol, Isopropoxyethanol, Propylenglykolphenylether, Propandiole, Diacetonalkohol, Diethylenglykol und/oder Butandiole ist.

6. Dispersion nach Anspruch 1, **dadurch gekennzeichnet**, sie
- 20 bis 30 Gew.-% oberflächenmodifizierte Indiumzinnoxid-Partikel
- 50 bis 70 Gew.-% Isopropoxyethanol
- 1 bis 10 Gew.-% Diethylenglykol
- 1 bis 5 Gew.-% eines Block-Polymethacrylsäureester-Block-Polyalkylenoxid-Copolymeren mit terminaler Carbonsäure bei der der Rest R₄ der allgemeinen Formel -C(O)CH₂CH₂COOH ist und ein Molekulargewicht von 11000-15000 aufweist, und
- 1 bis 5 Gew.-% Wasser
enthält.

7. Dispersion nach Anspruch 1, **dadurch gekennzeichnet**, sie
- 20 bis 30 Gew.-% oberflächenmodifizierte Indiumzinnoxid-Partikel,
- 50 bis 75 Gew.-% Diacetonalkohol
- 1 bis 10 Gew.-% Diethylenglycol und
- 0,2 bis 2 Gew.-% 3,6,9-Trioxadecansäure
enthält.

8. Verfahren zur Beschichtung eines Substrates bei dem man die Dispersion gemäß der Ansprüche 1 bis 7 auf das Substrat aufbringt, die flüssigen Bestandteile der Dispersion teilweise oder weitestgehend vollständig entfernt und die erhaltene Schicht thermisch oder mittels einer Mikrowelle, Lichtquelle oder eines Lasers gesintert.

9. Beschichtetes, transparentes und leitfähiges Substrat erhältlich gemäß des Verfahrens nach Anspruch 8.

10. Verwendung der Dispersion gemäß der Ansprüche 1 bis 7 oder des beschichteten Substrates gemäß Anspruch 9 zur Herstellung elektronischer Bauteile umfassend ein organisches, lichtemittierendes Bauteil (OLED), ein Elektrolumineszenzmodul, ein photovoltaisches Element, einen berührungssensitiven Bildschirm, ein Widerstandsheizelement, ein Infrarotschutzfilm, ein antistatisches Gehäuse, einen chemischen Sensor, einen elektromagnetischen Sensor, FKD (Flüssigkristalldisplay), einen Flüssigkristallbildschirm oder eine Flüssigkristallanzeige (LCD) und ein elektrophoretisches Display.
